# EUROPEAN PATENT SPECIFICATION

(11) **EP 1 130 321 B1**
(45) Date of publication and mention of the grant of the patent: **26.08.2009**
(21) Application number: 01301691.0
(22) Date of filing: 23.02.2001
(51) Int. Cl.: F23R 3/00, F23R 3/06

(54) **Combustor liner cooling thimbles and related method**
Kühlkragen für Brennkammerwand und entsprechendes Verfahren
Collerettes de refroidissement pour chemise de chambre de combustion et procédé correspondant

(30) Priority: 25.02.2000 US 513070
(43) Date of publication of application: 05.09.2001
(73) Proprietor: GENERAL ELECTRIC COMPANY, Schenectady, NY 12345 (US)
(72) Inventor: Brown, Daniel Mark, Altamont New York 12009 (US); Fitts, David Orus, Saratoga, New York 12020 (US); Black, Stephen Hugh, 90000 Belfort (FR)
(74) Representative: Bedford, Grant Richard

(56) References cited:
- GB-A- 1 356 114
- US-A- 4 339 925
- US-A- 4 719 748
- US-A- 5 388 412
- US-A- 5 499 499
- US-A- 5 533 864
- US-A- 6 000 908
- PATENT ABSTRACTS OF JAPAN vol. 1997, no. 06, 30 June 1997 (1997-06-30) -& JP 09 041991 A (TOSHIBA CORP), 10 February 1997 (1997-02-10)

## Description

This invention relates to combustors in turbo machinery and specifically, to the cooling of combustor liners in gas turbine combustors.

Conventional gas turbine combustion systems employ multiple combustor assemblies to achieve reliable and efficient turbine operation. Each combustor assembly includes a cylindrical liner, a fuel injection system, and a transition piece that guides the flow of the hot gas from the combustor to the inlet of the turbine. Generally, a portion of the compressor discharge air is used to cool the combustion liner and is then introduced into the combustor reaction zone to be mixed with the fuel and burned.

In systems incorporating impingement cooled transition pieces, a hollow sleeve surrounds the transition piece, and the sleeve wall is perforated so that compressor discharge air will flow through the cooling apertures in the sleeve wall and impinge upon (and thus cool) the transition piece. This cooling air then flows along an annulus between the sleeve surrounding the transition piece, and the transition piece itself. This so-called "cross flow" eventually flows into another annulus between the combustion liner and a surrounding flow sleeve. The flow sleeve is also formed with several rows of cooling holes around its circumference, the first row located adjacent a mounting flange where the flow sleeve joins to the outer sleeve of the transition piece. The cross flow is perpendicular to impingement cooling air flowing through the holes in the flow sleeve toward the combustor liner surface.

The presence of this crossflow has a direct influence on the cooling effectiveness in the zone near where the first row of jets in the flow sleeve would have been expected to impingement cool the combustor liner. Specifically, the crossflow impacts the first row of flow sleeve jets, bending them over and degrading their ability to impinge upon the liner. In one prior design of the flow sleeve impingement jets there are three rows of 24 jets spaced evenly around the circumference of the flow sleeve. This jet pattern in the presence of the strong crossflow from the transition piece impingement sleeve produces very low heat transfer rates on the liner surface near the first row of jets. This low heat transfer rate can lead to high liner surface temperatures and ultimately loss of strength. Several potential failure modes due to the high temperature of the liner include, but are not limited to, cracking of the aft sleeve weld line, bulging and triangulation. These mechanisms shorten the life of the liner, requiring replacement of the part prematurely.

US 4,719,748 discloses an impingement cooled transition duct. An arrangement for cooling hot gas casings in disclosed in US 4,339,925. Alternative gas turbine cooling systems are disclosed in JP 09041991 and US 5,388,412.

This invention enhances the cooling of the liner in Dry Low NOx type gas turbine combustors where jet impingement is used to cool the aft portion of the combustor liner. Even though there is a strong crossflow resulting from the transition piece cooling flow, the negative impact of the crossflow is minimized by the use of collars or cooling conduits, also referred to as a thimbles, that are inserted into the cooling holes in the combustor liner flow sleeve, through which the cooling jets pass. These cooling conduits provide a physical blockage to the cross flow which forces the crossflow into the desired flow path while simultaneously ensuring that the cooling jets effectively impinge on the combustor liner surface to be cooled.

The cooling conduits are preferably mounted in each hole of at least the first row of holes at the aft end of the flow sleeve, adjacent a mounting flange where the combustor liner and transition piece are joined. This arrangement decreases the gap between the jet orifice and impingement surface; blocks the cross flow that deflects the jets and forces it into the desired flowpath for the subsequent jet rows; allows the diameter of the jet to be smaller and thereby reduce cooling air; and provides consistent and accurate control over the location of jet impingement. It also stabilizes unwanted axial oscillation of the first row of jets, and prevents the formation of a thick boundary layer (and resulting reduced heat transfer) upstream of the first row of jets.

Various aspects and embodiments of the present invention are defined in the appended claims.

An embodiment of the invention will now be described, by way of example, with reference to the accompanying drawings, in which:-
FIGURE 1 is a simplified side cross section of a combustor transition piece aft of the combustor liner;
FIGURE 2 is a partial but more detailed perspective of a combustor liner and flow sleeve joined to the transition piece;
FIGURE 3 is a flow diagram illustrating impingement cooling of the combustor liner in a prior arrangement;
FIGURE 4 is a side elevation of a cooling conduit in accordance with the invention;
FIGURE 5 is a side section of the cooling conduit shown in Figure 4; and
FIGURE 6 is a flow diagram illustrating impingement cooling of the combustor liner in accordance with this invention.

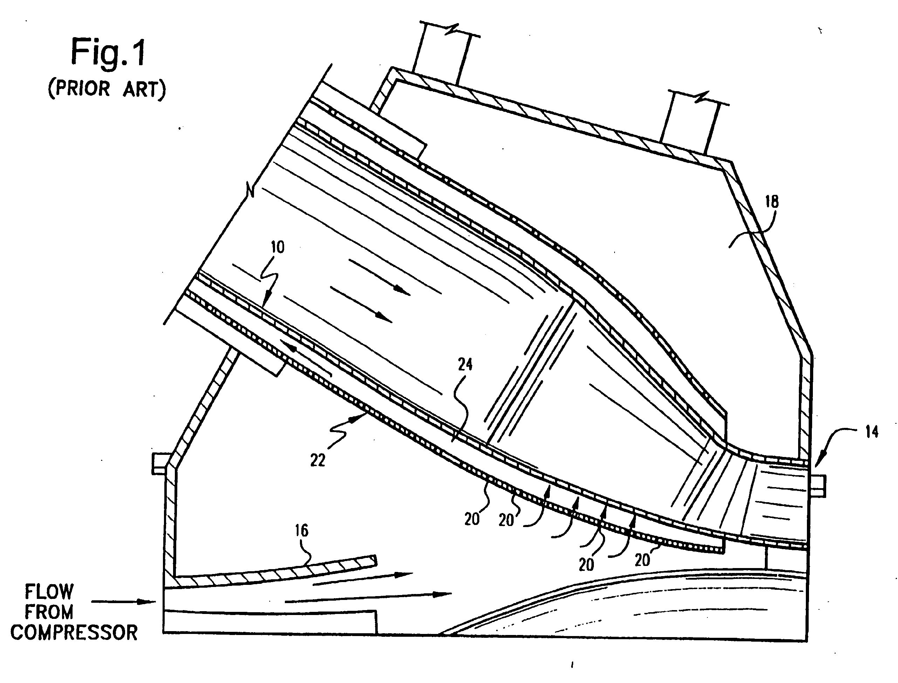

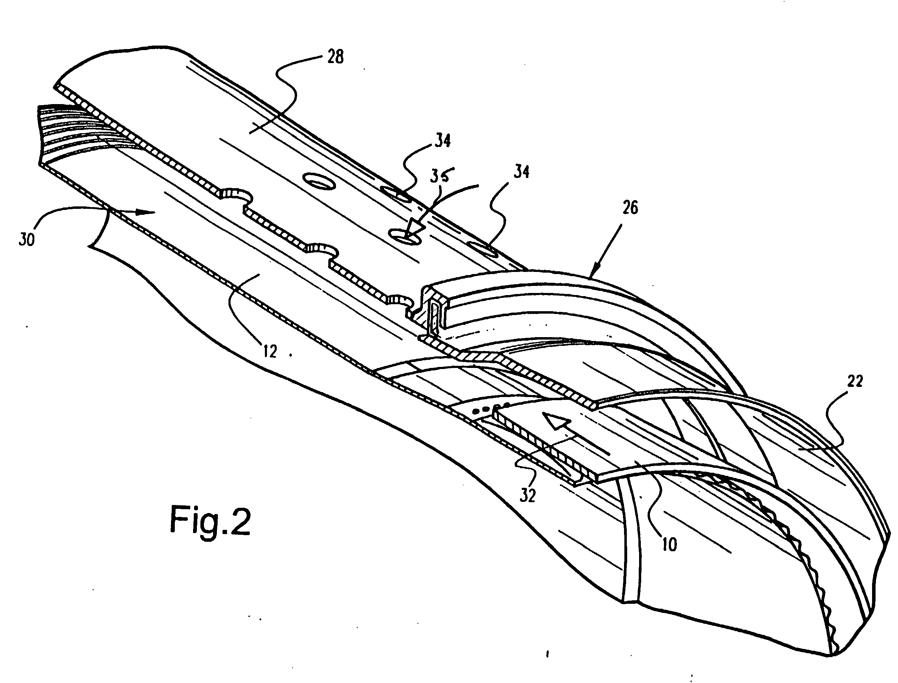

With reference to Figures 1 and 2, a typical gas turbine includes a transition piece 10 by which the hot combustion gases from an upstream combustor as represented by the combustion liner 12 are passed to the first stage of a turbine represented at 14. Flow from the gas turbine compressor exits an axial diffuser 16 and enters into a compressor discharge case 18. About 50% of the compressor discharge air passes through apertures 20 formed along and about a transition piece impingement sleeve 22 for flow in an annular region or annulus 24 between the transition piece 10 and the radially outer transition piece impingement sleeve 22. The remaining approximately 50% of the compressor discharge flow passes into flow sleeve holes 34 and mixes with the air from the transition piece from annulus 30 and eventually mixes with the gas turbine fuel in the combustor.

As best seen in Figure 2, the impingement sleeve 22 of the transition piece 10 is received in a telescoping relationship in a mounting flange 26 on the aft end of the combustor flow sleeve 28, and the transition piece 10 also receives the combustor liner 12 in a telescoping relationship. The combustor flow sleeve 28 surrounds the combustor liner 12 creating a flow annulus 30 therebetween. It can be seen from the flow arrow 32 in Figure 2, that crossflow cooling air traveling in the annulus 24 continues to flow into the annulus 30 in a direction perpendicular to impingement cooling air flowing through the cooling holes 34 (see flow arrow 35) formed about the circumference of the flow sleeve 28 (while three rows are shown in Fig. 2, the flow sleeve may have any number of rows of such holes).

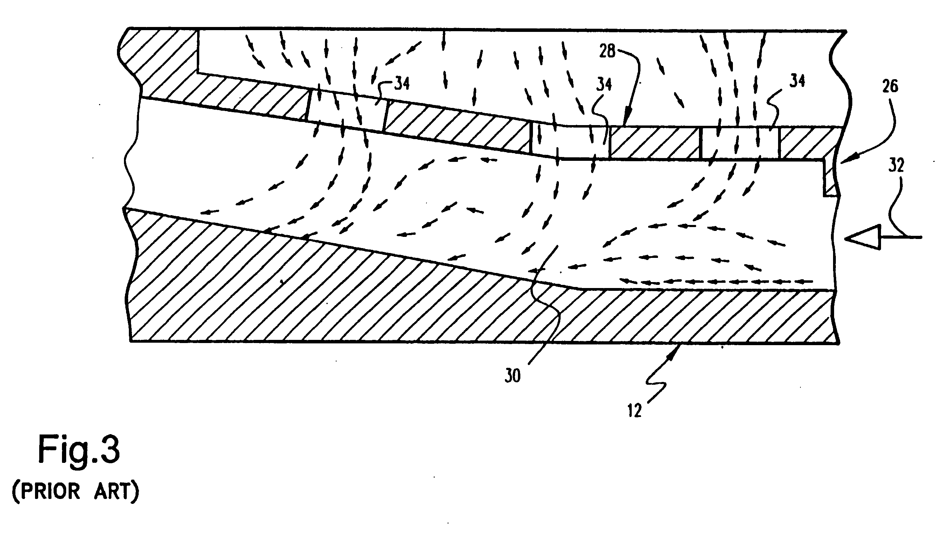

The impingement cooling flow in the first row of holes 34 in the flow sleeve (the row of holes closest to the mounting flange 26) is particularly subject to disruption by the crossflow from the annulus 24. The negative impact can be seen in Figure 3. The test impingement sleeve/combustor liner configuration shown in Figure 3 is slightly different than the arrangement in Figure 2, but similar reference numerals are used for ease of understanding. The cross flow impacts on the first row of cooling jets exiting the holes 34, bending them over and degrading their ability to impinge upon the liner 12. Depending on the relative strengths of the cross flow and jets, the jet flow may not even reach the surface of the combustor liner 12. Because the impingement jets are high velocity, there is a characteristic zone of low static pressure behind the jets and near the flow sleeve entrance hole. The cross flow accelerates toward the low pressure zone, leading to a velocity gradient across the flow sleeve/liner annulus 30. The resulting low velocity and thickened boundary layer near the liner surface has very poor heat transfer effectiveness.

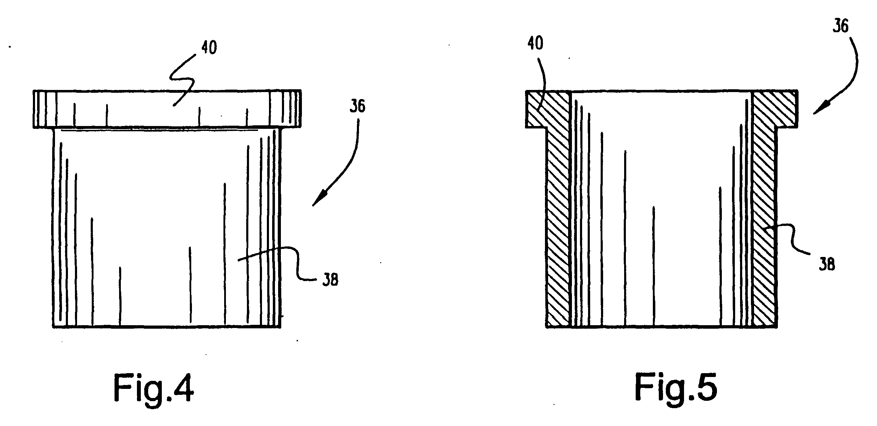

To neutralize the negative impact of the crossflow on the cooling jets, cooling conduits 36 as shown in Figure 4 are employed. These cooling conduits may comprise tubes 38 of circular cross section, with a flat ring or flange 40 welded to its top. The dimensions of the 36 are set by the liner/flow sleeve gap, the tolerance of this dimension, the jet and cross flow momentum, the geometric constraints of the cooling conduit, and the specific cooling requirements. A single cooling conduit 36 is inserted into each of the first row flow sleeve holes 34 and welded at the ring or flange 40 to the outside of the flow sleeve 28. There are 20 cooling conduits mounted in a like number of holes 34 around the circumference of the flow sleeve 28 in at least the first row adjacent mounting flange 26, but they could be added to the second and/or third row as well. The critical location to be cooled in one exemplary embodiment, has been determined to be about 762 mm (30 inches) from the opposite end of the flow sleeve (not shown).

The cross section of the tube 38 is shown to be circular but other cross-sectional shapes could be used, e.g., square, triangular, airfoil-shaped, semi-circular and the like.

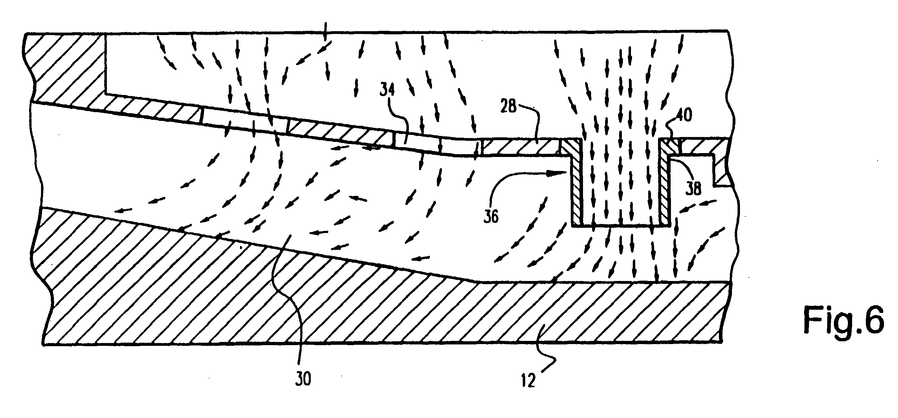

Figure 6 shows a cross section revealing the flow field in the liner/flow sleeve annulus with the cooling conduits 36 in place. This figure may be contrasted with Figure 3 to identify the benefits of enhancing first row jets by use of flow sleeve cooling conduits. It is particularly evident that impingement cooling of the liner 12 is enhanced at the first row of holes 36, and that the crossflow has been blocked at least to the extent of allowing cooling jets from the impingement cooling holes 34 to reach the surface of the liner 12. In fact, it has been established that the cooling conduits add 852 w/m² °C (150 BTU/HR*ft²*F) to the liner heat transfer coefficient at the first row jet centerline 74.2 cm (29.2 inches) from the opposite end of the flow sleeve.

The device and process in accordance with this invention can be used in any impingement cooling application where there is a crossflow present at the first row of jets.

## Claims

1. A combustor for a turbine comprising:
a combustor liner (12);
a first flow sleeve (28) surrounding said liner and forming a first flow annulus (30) therebetween, said first flow sleeve having a plurality of rows of cooling holes (34) formed about a circumference of said flow sleeve for directing cooling air into said first flow annulus;
a transition piece (10) connected to said combustor liner (12) and said first flow sleeve (28) and adapted to carry hot combustion gases to a stage (14) of the turbine;
said transition piece surrounded by a second flow sleeve (22), said first flow annulus (30) connecting to said second flow annulus (24);
wherein a first of said plurality of rows of cooling holes (34) in said first flow sleeve is located adjacent said transition piece; wherein
one or more cooling conduits (36) are mounted in the cooling holes (34) of at least said first plurality of rows of cooling holes in said first flow sleeve for directing cooling air into said first flow annulus (30) to impingement cool the combustor liner and mix with cooling air from said second flow annulus (24);
wherein said one or more cooling conduits extend radially towards but not engaging said liner thereby providing a physical blockage to the crossflow of cooling air from said second flow annulus (24) so as to ensure that air flowing through the conduits reaches the surface of combustion liner; and
wherein said cooling conduits (36) each include a tube (38) with a radial flange (40) at one end thereof, the radial flange (40) being welded to the outside of the flow sleeve (28).

2. The combustor of claim 1, wherein each said cooling conduit (36) is welded to said flow sleeve (28), with an opposite end of said tube spaced from said liner by a predetermined space.

3. The combustor of claim 1, wherein said plurality of cooling conduits (36) are circular in cross-section.

4. A combustion liner flow sleeve (28) adapted for mounting in surrounding relationship to a combustion liner (12) in a combustor as claimed in claim 1,
said flow sleeve comprising a tubular body (28) for surrounding said liner and there by forming a first flow annulus (30) therebetween, said sleeve having a plurality of rows of cooling holes (34), a first one of said plural rows located adjacent one end of said flow sleeve; said one end of said flow sleeve adapted for being adjacent a second flow annulus (24) connectable to the first flow annulus (30); and a cooling conduit (36) mounted in each hole of at least said first row of holes,
wherein the cooling conduits (36) extend radially inward of the sleeve so that, in the mounted condition, the cooling conduits extend towards but not engaging said liner thereby providing a physical blockage to the crossflow of cooling air from said second flow annulus (24) so as to ensure that, in use, air flowing through the conduits reaches the surface of combustion liner wherein said cooling conduits (36) each include a tube (38) with a radial flange (40) at one end thereof, the radial flange (40) beings welded to the outside of the flow sleeve (28).

5. A method for cooling a combustor liner (12) of a gas turbine combustor, said combustor liner having a substantially circular cross-section, and a first flow sleeve (28) surrounding said liner in substantially concentric relationship therewith creating a first flow annulus (30) therebetween for feeding air to the gas turbine compressor, and wherein a transition piece is connected to said combustor liner, with the transition piece surrounded by a second flow sleeve (22), thereby creating a second annulus in communication with said first flow annulus; the method comprising:
a) providing a plurality of axially spaced rows of cooling holes (34) in said first flow sleeve (28), each row extending circumferentially of said first flow sleeve (28), a first of said rows adjacent said transition piece and said second flow sleeve (22);
b) locating a plurality of cooling conduits (36) in the cooling holes (34) of at least said first of said rows, wherein said cooling conduits (36) each include a tube (38) with a radial flange (40) at one end thereof and wherein said cooling conduits extend radially towards but not engaging said liner whereby a physical blockage to a crossflow of cooling air from said second flow annulus (24) can be provided;
c) welding said radial flange (40) to the outside of the first flow sleeve (28); and
d) supplying cooling air to said cooling holes (34) such that said cooling conduits (36) direct said cooling air against said liner (12) so as to ensure that air flowing through the conduits reaches the surface of combustion liner (12);
e) thereafter directing said cooling air axially within said first flow annulus (30).

6. The method of claim 5, wherein said tube (38) has a circular cross section.

## Patentansprüche

1. Brennkammer für eine Turbine, aufweisend:
einen Brennkammereinsatz (12);
eine erste Kanalwand (28), die den Einsatz umgibt und mit diesem einen ersten Strömungsringraum (30) ausbildet, wobei die erste Kanalwand mehrere Reihen von Kühllöchern (34) enthält, die um einen Umfang der Kanalwand herum ausgebildet sind, um Kühlluft in den ersten Strömungsringraum zu leiten;
ein Übergangsstück (10), das mit dem Brennkammereinsatz (12) und der ersten Kanalwand (28) verbunden und dafür angepasst ist, heiße Verbrennungsgase zu einer Stufe (14) der Turbine zu transportieren;
wobei das Übergangsstück von einer zweiten Kanalwand (22) umgeben ist, und wobei der erste Strömungsringraum (30) mit dem zweiten Strömungsringraum (24) in Verbindung steht;
wobei eine erste von den mehreren Reihen von Kühllöchern (34) in der ersten Kanalwand angrenzend an das Übergangsstück angeordnet ist; wobei
in den Kühllöchern (34) von wenigstens den ersten mehreren Reihen der Kühllöcher eine oder mehrere Kühldurchführungen (36) in der ersten Kanalwand befestigt sind, um Kühlluft in den ersten Strömungsringraum (30) zur Prallkühlung des Brennkammereinsatzes und zur Vermischung mit Kühlluft aus dem zweiten Strömungsringraum (24) zu leiten;
wobei sich die eine oder die mehreren Kühldurchführungen radial zu dem Einsatz hin erstrecken, aber damit nicht in Eingriff stehen, um **dadurch** eine physikalische Blockierung für die Querströmung von Kühlluft aus dem zweiten Strömungsringraum (24) erzeugen, um so sicherzustellen, dass durch die Rohrstücke strömende Luft die Oberfläche des Brennkammereinsatzes erreicht; und
wobei die Kühldurchführungen (36) jeweils ein Rohr (38) mit einem radialen Flansch (40) an ihrem einen Ende enthalten, wovon der radiale Flansch (40) mit der Außenseite der Kanalwand (28) verschweißt ist.

2. Brennkammer nach Anspruch 1, wobei jede Kühldurchführung (36) mit der Kanalwand (28) verschweißt ist, und wobei ein gegenüberliegendes Ende des Rohres von dem Einsatz über einen vorbestimmten Zwischenraum beabstandet ist.

3. Brennkammer nach Anspruch 1, wobei die mehreren Kühldurchführungen (36) im Querschnitt kreisrund sind.

4. Brennkammereinsatzwand (28), die für eine Befestigung in umgebender Beziehung an einem Brennkammereinsatz (12) in einer Brennkammer gemäß Anspruch 1 angepasst ist,
wobei die Kanalwand einen rohrförmigen Körper (28) zum Umhüllen des Einsatzes aufweist und **dadurch** einen ersten Strömungsringraum (30) dazwischen ausbildet, wobei die Wand mehrere Reihen von Kühllöchern (34) hat, eine erste von den mehreren Reihen angrenzend an ein Ende der Kanalwand angeordnet ist; wobei das eine Ende der Kanalwand dafür angepasst ist, verbindbar mit dem ersten Strömungsringraum (40) an den zweiten Strömungsringraum (24) anzugrenzen; und eine Kühldurchführung (36), die in jedem Loch von der wenigstens ersten Reihe von Löchern befestigt ist,
wobei sich die Kühldurchführungen (36) radial so erstrecken, dass sich, im eingebauten Zustand, die Kühldurchführungen radial nach innen von der Wand zu dem Einsatz hin erstrecken aber nicht damit in Eingriff stehen, um **dadurch** eine physische Blockierung der Querströmung von Kühlluft aus dem zweiten Strömungsringraum (24) zu erzeugen, um so sicherzustellen, dass im Einsatz durch die Durchführungen strömende Luft die Oberfläche des Brennkammereinsatzes erreicht, wobei die Kühldurchführungen (36) jeweils ein Rohr (38) mit einem radialen Flansch an einem Ende davon enthalten, wovon der radiale Flansch (40) mit der Außenseite der Strömungshülse (28) verschweißt ist.

5. Verfahren zum Kühlen eines Brennkammereinsatzes (12) einer Gasturbinenbrennkammer, wobei der Brennkammereinsatz einen im Wesentlichen kreisrunden Querschnitt hat, und eine erste Kanalwand (28), die den Einsatz in einer im Wesentlichen konzentrischen Beziehung damit umgibt und einen ersten Strömungsringraum (30) dazwischen erzeugt, um Luft aus dem Gasturbinenverdichter zuzuführen, und wobei ein Übergangsstück mit dem Brennkammereinsatz verbunden ist, wobei das Übergangsstück von einer zweiten Kanalwand (22) umgeben ist, um **dadurch** einen zweiten Ringraum in Verbindung mit dem ersten Strömungsringraum zu erzeugen; wobei das Verfahren die Schritte aufweist:
a) Bereitstellen von mehreren axial in Abstand angeordneten Reihen von Kühllöchern (34) in der ersten Kanalwand (28), wobei sich jede Reihe in Umfangsrichtung um die erste Kanalwand (28) erstreckt, wovon eine erste von den Reihen an das Übergangsstück und die zweite Kanalwand (22) angrenzt;
b) Positionieren mehrerer Kühldurchführungen (36) in den Kühllöchern (34) von den wenigstens ersten von den Reihen,
wobei die Kühldurchführungen (36) jeweils ein Rohr (38) mit einem radialen Flansch (40) an einem Ende davon enthalten und
wobei sich die Kühldurchführungen radial zu dem Einsatz hin erstrecken, aber nicht damit in Eingriff stehen, wodurch eine physikalische Blockierung einer Querströmung von Kühlluft aus dem zweiten Strömungsringraum (24) erzeugt werden kann;
c) Verschweißen des radialen Flansches (40) mit der Außenseite der ersten Kanalwand (28); und
d) Zuführen von Kühlluft zu den Kühllöchern (34) so, dass die Kühldurchführungen (36) die Kühlluft gegen den Einsatz (12) leiten, um so sicherzustellen, dass durch die Durchführungen strömende Luft die Oberfläche des Brennkammereinsatzes (12) erreicht;
e) danach Leiten der Kühlluft in axialer Richtung innerhalb des ersten Strömungsringraums (30).

6. Verfahren nach Anspruch 5, wobei das Rohr (38) einen kreisrunden Querschnitt hat.

## Revendications

1. Chambre de combustion pour une turbine, comprenant :
une chemise (12) de chambre de combustion;
une première gaine d'écoulement (28) entourant ladite chemise et formant un premier espace d'écoulement annulaire (30) avec elle, ladite première gaine d'écoulement comportant une pluralité de rangées de trous de refroidissement (34) formés sur la circonférence de la gaine d'écoulement pour diriger de l'air de refroidissement dans ledit premier espace d'écoulement annulaire;
un élément de transition (10) raccordé à ladite chemise (12) de chambre de combustion et à ladite première gaine d'écoulement (28) et adapté pour transporter des gaz de combustion chauds à un étage (14) de la turbine;
ledit élément de transition étant entouré d'une deuxième gaine d'écoulement (22), ledit premier espace d'écoulement annulaire (30) communiquant avec ledit deuxième espace d'écoulement annulaire (24);
où une première rangée de ladite pluralité de rangées de trous de refroidissement (34) de ladite première gaine d'écoulement est adjacente audit élément de transition; où
une ou plusieurs conduites de refroidissement (36) sont montées dans les trous de refroidissement (34) au moins de ladite première pluralité de rangées de trous de refroidissement de ladite première gaine d'écoulement, aux fins de diriger l'air de refroidissement dans ledit premier anneau d'écoulement (30) pour refroidir par impact la chemise de la chambre de combustion et mélanger cet air à l'air de refroidissement dudit deuxième anneau d'écoulement (24);
où ladite conduite ou ladite pluralité de conduites de refroidissement s'étendent radialement en direction de ladite chemise, sans toutefois entrer en contact avec elle, assurant ainsi un blocage physique du courant transversal d'air de refroidissement provenant du deuxième anneau d'écoulement (24), de manière à garantir que l'air s'écoulant dans les conduites atteint la surface de la chemise de la chambre de combustion; et
où lesdites conduites de refroidissement (36) comprennent chacune un tube (38) avec une collerette (40) radiale à l'une de ses extrémités, cette collerette (40) radiale étant soudée à l'extérieur de la gaine d'écoulement (28).

2. Chambre de combustion selon la revendication 1, dans laquelle chacune desdites conduites de refroidissement (36) est soudée à ladite gaine d'écoulement (28), l'extrémité opposée dudit tube étant espacée de ladite chemise d'une distance prédéterminée.

3. Chambre de combustion selon la revendication 1, dans laquelle ladite pluralité de conduites de refroidissement (36) ont une section transversale circulaire.

4. Gaine d'écoulement (28) de chemise de chambre de combustion, adaptée pour être montée de manière à entourer une chemise de combustion (12) dans une chambre de combustion selon la revendication 1,
ladite gaine d'écoulement étant constituée d'un corps tubulaire (28) destiné à entourer ladite chemise et formant ainsi un premier espace d'écoulement annulaire (30) avec elle, la gaine comportant une pluralité de rangées de trous de refroidissement (34), une première rangée de ladite pluralité de rangées étant adjacente à une extrémité de ladite gaine d'écoulement; ladite extrémité de la gaine d'écoulement étant adaptée pour être adjacente à un deuxième espace d'écoulement annulaire (24) pouvant être mis en communication avec le premier anneau d'écoulement (30); et une conduite de refroidissement (36) étant montée dans chaque trou au moins de ladite première rangée de trous,
où les conduites de refroidissement (36) s'étendent radialement vers l'intérieur de la gaine, de manière à ce que, à l'état monté, les conduites de refroidissement s'étendent en direction de ladite chemise, sans entrer en contact avec elle, assurant ainsi un blocage physique du courant transversal d'air de refroidissement provenant dudit deuxième anneau d'écoulement (24), de manière à garantir que, lors de l'utilisation, l'air s'écoulant dans les conduites atteint la surface de la chemise de combustion, lesdites conduites de refroidissement (36) comprenant chacune un tube (38) avec une collerette (40) radiale à l'une de ses extrémités, cette collerette (40) radiale étant soudée à l'extérieur de la gaine d'écoulement (28).

5. Procédé de refroidissement d'une chemise (12) de chambre de combustion d'une turbine à gaz, ladite chemise de chambre de combustion ayant une section transversale sensiblement circulaire, et une première gaine d'écoulement (28) entourant ladite chemise de façon sensiblement concentrique, créant ainsi entre elles un premier espace d'écoulement annulaire (30) pour alimenter en air le compresseur de la turbine à gaz, et un élément de transition étant raccordé à ladite chemise de chambre de combustion et étant entouré d'une deuxième gaine d'écoulement (22), créant ainsi un deuxième espace annulaire qui communique avec ledit premier anneau d'écoulement; le procédé comprenant les étapes suivantes :
a) réalisation d'une pluralité de rangées axialement espacées de trous de refroidissement (34) dans ladite première gaine d'écoulement (28), chaque rangée s'étendant sur la circonférence de la première gaine d'écoulement (28), une première rangée desdites rangées étant adjacente audit élément de transition et à ladite deuxième gaine d'écoulement (22);
b) mise en place d'une pluralité de conduites de refroidissement (36) dans les trous de refroidissement (34) au moins de ladite première rangée desdites rangées, lesdites conduites de refroidissement (36) comportant chacune un tube (38) avec une collerette (40) radiale à l'une de ses extrémité, et lesdites conduites de refroidissement s'étendant radialement en direction de ladite chemise, sans toutefois entrer en contact avec elle, grâce à quoi il est possible d'établir un blocage physique vis-à-vis d'un courant transversal d'air de refroidissement provenant dudit deuxième anneau d'écoulement (24);
c) soudage de ladite collerette (40) radiale à l'extérieur de la première gaine d'écoulement (28;) et
d) acheminement d'air de refroidissement auxdits trous de refroidissement (34), de manière à ce que lesdites conduites de refroidissement (38) dirigent ledit air de refroidissement contre la chemise (12), de façon à garantir que l'air s'écoulant dans les conduites atteint la surface de la chemise de combustion (12);
e) ensuite, orientation axiale dudit air de refroidissement dans ledit premier espace d'écoulement annulaire (30).

6. Procédé selon la revendication 5, selon lequel ledit tube (38) présente une section transversale circulaire.
